# EUROPÄISCHE PATENTSCHRIFT

(11) **EP 3 156 647 B1**
(45) Veröffentlichungstag und Bekanntmachung des Hinweises auf die Patenterteilung: **10.03.2021**
(21) Anmeldenummer: 16191289.4
(22) Anmeldetag: 29.09.2016
(51) Int. Cl.: F03D 80/80

(54) **VERFAHREN ZUM EINBAU EINES PENDELDÄMPFERS IN EINE WINDENERGIEANLAGE, BEFÜLLUNGSSYSTEM UND WINDENERGIEANLAGE**
METHOD FOR INSTALLING A SWINGING MOVEMENT DAMPER INTO A WIND TURBINE, FILLING SYSTEM AND WIND TURBINE
PROCEDE D'INTEGRATION D'UN AMORTISSEUR PENDULAIRE DANS UNE EOLIENNE, SYSTEME DE REMPLISSAGE ET EOLIENNE

(30) Priorität: 12.10.2015 DE 102015013098
(43) Veröffentlichungstag der Anmeldung: 19.04.2017
(73) Patentinhaber: Siemens Gamesa Renewable Energy Service GmbH, 22297 Hamburg (DE)
(72) Erfinder: VICTOR, Albrecht, 49082 Osnabrück (DE)
(74) Vertreter: Wallinger Ricker Schlotter Tostmann

(56) Entgegenhaltungen:
- WO-A1-2015/062608
- DE-A1- 19 856 500

## Beschreibung

Die Erfindung betrifft ein Verfahren zum Einbau eines Pendeldämpfers in eine Windenergieanlage, der in einem Turm der Windenergieanlage unterhalb einer Gondel der Windenergieanlage angeordnet wird. Die Erfindung betrifft ferner ein Befüllungssystem für einen Pendeldämpfer einer Windenergieanlage sowie eine Windenergieanlage mit einem Pendeldämpfer, der in einem Turm der Windenergieanlage an einer Turmplattform unterhalb einer Gondel der Windenergieanlage angeordnet ist.

Bei Windenergieanlagen handelt es sich um stark schwingungsanfällige Strukturen. Jede Struktur, so auch eine Windenergieanlage oder ein Windenergieanlagenturm ohne Gondel, d.h. vor Fertigstellung der Windenergieanlage, reagiert auf äußere Anregung in einer bestimmten Frequenz mit eigenen Schwingungen. Dabei hat jede Struktur eine Eigenfrequenz, also die Frequenz oder Frequenzen, in denen das System schwingt, wenn es ausgelenkt und dann sich selbst überlassen wird. Für Windenergieanlagen ist insbesondere die erste Eigenfrequenz relevant, deren zugehörige erste Eigenform im Wesentlichen aus einer Biegeverformung des Turmes besteht. Sie wird daher auch "erste Biegeeigenfrequenz" genannt.

Kritisch wird eine Schwingungsanregung besonders dann, wenn sie eine im Frequenzbereich der Eigenfrequenz der Struktur erreicht und so zu Resonanzschwingungen führt, die die Struktur zerstören können.

Windenergieanlagen werden hauptsächlich durch den auftreffenden Wind zum Schwingen angeregt. Bei fertig errichteten Anlagen treten im Betrieb Schwingungen des Turms vor allem in Reaktion auf die Belastung des Rotors durch den Wind auf. Bei Offshore-Windenergieanlagen muss zudem die Anregung aus auftreffenden Wellen berücksichtigt werden.

Zur Schwingungsdämpfung werden in Windenergieanlagen in einigen Fällen Schwingungsdämpfer eingesetzt, beispielsweise Pendeldämpfer oder Pendeltilger. Solche Pendeldämpfer sind auf die Schwingungseigenfrequenz der Windenergieanlage eingestellt und im oberen Bereich des Windenergieanlagenturmes montiert, knapp unterhalb der Gondel. Wenn der Turm anfängt, mit seiner Eigenfrequenz zu schwingen, übernimmt der pendelnd aufgehängte Pendeldämpfer einen Teil der Schwingungsenergie und beginnt, gegenphasig zur Windenergieanlage zu schwingen bzw. zu pendeln. Da nunmehr ein Teil der Schwingungsenergie in den Pendeldämpfer übergegangen ist, wird die Amplitude der Schwingung der Windenergieanlage selbst reduziert.

Für Pendeldämpfer in Windenergieanlagen werden hohe Massen, beispielsweise von 30 Tonnen und mehr, benötigt. Dies stellt eine Herausforderung für den Ablauf der Herstellung und den Transport dar. Übliche Dämpfermassen von Pendeldämpfern bestehen beispielsweise aus übereinander gestapelten Stahlplatten oder Stahlbetonvollkörpern. Diese müssen während der Herstellung und des Transports der Windenergieanlage bzw. des Turms mit berücksichtigt werden, obwohl sie in diesem Zustand noch nicht benötigt werden. Dies bedeutet, dass beispielsweise Krankapazitäten, Transportsicherungen und Transportgeräte größer gewählt werden müssen als in dem Fall, dass kein Pendeldämpfer verwendet wird. Sie verursachen somit zusätzliche Kosten.

WO 2015/062608 A1 beschreibt ein Verfahren zur Schwingungsdämpfung bei Windenergieanlagen, bei der mit Material befüllte Säcke vor oder nach dem Aufrichten des Turms in diesem angebracht werden.

Demgegenüber liegt der vorliegenden Erfindung die Aufgabe zugrunde, die Errichtung von Windenergieanlagen mit Pendeldämpfern zu erleichtern.

Diese Aufgabe wird durch ein Verfahren zum Einbau eines Pendeldämpfers in eine Windenergieanlage gelöst, der in einem Turm der Windenergieanlage unterhalb einer Gondel der Windenergieanlage angeordnet wird, wobei vor oder nach dem Aufrichten des Turms zunächst ein Pendelbehälter im Turm, insbesondere an einer Turmplattform, befestigt wird und in einem aufgerichteten Zustand des Turms mit Pendelballastmaterial befüllt wird, wobei Schüttgut in trockenem Zustand oder mit Wasser vermischt oder Wasser als Pendelballastmaterial von oben durch wenigstens einen Einfüllschlauch oder wenigstens eine Einfüllröhre in den Pendelbehälter eingefüllt oder gepumpt wird.

Damit wird erfindungsgemäß das Bauteil "Dämpfermasse" zunächst in Form eines leeren Behälters hergestellt und in die vorgesehene Turmsektion zwischen Pendelaufhängung und Dämpferplattform montiert. Dies kann bereits geschehen, bevor der Turm aufgerichtet wird. Der leere Behälter hat ein Gewicht, das einen Bruchteil, beispielsweise 10 % des Gesamtgewichts der Pendeldämpfermasse ausmacht. Die entsprechenden Zusatzaufwendungen für den Transport, den Kran und die weiteren benötigten Sicherungsteile sind in diesem Fall sehr viel stärker limitiert. Alternativ kann der Leerbehälter auch in dem bereits errichteten Turm von oben eingesetzt werden oder mit der obersten Sektion auf den Turm aufgesetzt werden. Die Errichtung des Turms in mehreren Sektionen ist für die Errichtung von Windenergieanlagen an Land typisch, während Offshore-Windenergieanlagen üblicherweise so errichtet werden, dass der Turm an Land zunächst vollständig zusammengesetzt wird und dann im Ganzen auf ein Errichterschiff liegend oder stehend zum Aufstellungsort gebracht und dort ggf. aufgerichtet und auf eine Gründung gesetzt wird.

Das erfindungsgemäße Verfahren hat den Vorteil, dass die Masse des Pendeldämpfers die Masse des Turms während des Errichtens nicht wesentlich erhöht. Umgekehrt kann das Befüllen in großer Höhe trotz der zu erreichenden Masse von 30 Tonnen oder mehr mit wenig Aufwand erfolgen, da die Pendelmasse nicht in einem großen Stück benötigt wird.

Für den Fall der Verwendung von Wasser als Ballastmaterial ist zu beachten, dass es sich erfindungsgemäß auch dann noch um einen Pendeldämpfer handelt, da das Wasser reine Pendelmasse im pendelnd aufgehängten Pendelbehälter darstellt. Dies unterscheidet den wassergefüllten Pendeldämpfer von Flüssigkeitsdämpfern, bei denen eine Wassersäule in einem Behälter schwingt, der seinerseits fest mit dem zu dämpfenden Objekt verbunden ist, sei es ein Gebäude oder eine Windenergieanlage.

Trockenes Schüttgut kann beispielsweise von einem Kran in Einheiten von wenigen bis zu einigen Tonnen gehoben werden und anschließend durch den Einfüllschlauch oder die Einfüllröhre in den Pendelbehälter abgelassen werden. Ein solcher Schüttgutbehälter kann beispielsweise 5 Kubikmeter fassen, beispielsweise mit einem Durchmesser von 1,5 Metern und einer Höhe von 3 Metern. 5 Kubikmeter feinkörniger Sand wiegen ca. 7,5 Tonnen, so dass die Befüllung mit ca. 4 Hüben beendet wäre.

Eine kontinuierliche Befüllung ist bei der Befüllung mit einem Strom von mit Wasser vermischtem Schüttgut, beispielsweise Sand, möglich, ebenso bei einer Befüllung mit Wasser als Ballastmasse.

Wenn vorzugsweise der wenigstens eine Einfüllschlauch oder die wenigstens eine Einfüllröhre an einem unteren Ende lösbar mit einer Oberseite des Pendelbehälters verbunden ist, wobei der wenigstens eine Einfüllschlauch oder die wenigstens eine Einfüllröhre nach der Befüllung des Pendelbehälters vom Pendelbehälter entfernt wird, wird sichergestellt, dass der Pendeldämpfer nach erfolgter Befüllung frei schwingen kann und Beschädigungen des Einfüllschlauchs oder der Einfüllröhre vermieden werden.

In einer bevorzugten Weiterbildung weist die Turmplattform eine Durchführungsöffnung zur Durchführung von Pendelballastmaterial auf und ist der wenigstens eine Einfüllschlauch oder die wenigstens eine Einfüllröhre an einem oberen Ende lösbar oder fest an der Durchführungsöffnung mit der Turmplattform verbindbar oder verbunden oder durch die Durchführungsöffnung führbar oder geführt, wobei der wenigstens eine Einfüllschlauch oder die wenigstens eine Einfüllröhre nach der Befüllung des Pendelbehälters von der Turmplattform entfernt wird oder an einer Unterseite oder einer Oberseite der Turmplattform zur weiteren Benutzung verstaut wird.

Somit dient die Turmplattform auch gleichzeitigt als Stütze und haltendes Element für den wenigstens einen Einfüllschlauch oder die wenigstens eine Einfüllröhre. Damit wird die Befüllung des Pendelbehälters mit Schüttgut oder Wasser sicherer gestaltet. Ein Verstauen des Einfüllschlauches oder der Einfüllröhre an der Turmplattform ist möglich, falls entsprechende Haltemittel vorhanden sind und entsprechend Stauraum vorhanden ist. Dies kann vorteilhaft sein, wenn die tatsächliche Pendelmasse nach einer anfänglichen Beobachtungszeit, ob die Schwingungsdämpfungswirkung ausreichend ist, noch einmal geändert werden soll.

Für das Befüllen des Pendelbehälters mit Schüttgut oder Wasser ist vorzugsweise vorgesehen, dass zum Einfüllen von Schüttgut ein Abgabeschlauch oder eine Abgaberöhre an einer Unterseite einer Abgabevorrichtung für Schüttgut in einen Annahmestutzen, insbesondere einen Trichter, am oberen Ende des wenigstens einen Einfüllschlauchs oder der wenigstens einen Einfüllröhre eingeführt wird, bevor mit dem Einfüllen von Schüttgut oder Wasser begonnen wird. Diese Aktion kann von einem Kranführer ohne weitere Mitarbeiter alleine anhand von Kamerabildern durchgeführt werden.

Besonders für den Fall, dass Schüttgut mit Wasser vermischt in den Pendelbehälter eingepumpt wird, ist vorzugsweise vorgesehen, dass mit dem Schüttgut vermischtes oder überschüssiges Wasser über einen an einem Boden des Pendelbehälters eingelassenen Abfluss und gegebenenfalls einen daran angeschlossenen Abflussschlauch abgeführt wird, wobei insbesondere das Schüttgut im Pendelbehälter zurückgehalten wird. Dafür ist der Abfluss vorteilhafterweise mit einem Filter versehen, beispielsweise einem Textilfilter, beispielsweise aus einem sogenannten "Geotextil", das beispielsweise im Wasserbau verwendet wird. Der Filter ist vorzugsweise auf einem strukturell stabilen Sieb aufgesetzt, so dass Wasser den Filter und das Sieb durchdringen können, der Sand jedoch vom Filter zurückgehalten wird. Ein Abfluss kann auch bei der Befüllung mit Wasser vorteilhaft sein, beispielsweise zur Feinabstimmung.

Die der Erfindung zugrundeliegende Aufgabe wird auch durch ein Befüllungssystem für einen Pendeldämpfer einer Windenergieanlage gelöst, umfassend einen Pendeldämpfer mit einem Pendelbehälter, der an einer Turmplattform im oberen Bereich eines Turms einer Windenergieanlage befestigbar oder befestigt ist, eine Abgabevorrichtung, die ausgebildet ist, Pendelballastmaterial in den Pendelbehälter zu füllen, sowie einen Kran, mittels dessen die Abgabevorrichtung über den Pendelbehälter bringbar ist. Mit diesem Befüllungssystem ist das zuvor beschriebene erfindungsgemäße Verfahren ausführbar und es weist die gleichen Merkmale, Eigenschaften und Vorteile auf.

Erfindungsgemäß ist weiter eine Leitvorrichtung zur Einleitung des Pendelballastmaterials in den Pendelbehälter umfasst.

Gemäß einer ersten erfinderischen Ausführungsform ist vorteilhafterweise die Abgabevorrichtung als Schüttgutabgabevorrichtung für trockenes oder mit Wasser vermischtes Schüttgut oder Wasser und die Leitvorrichtung als wenigstens ein Einfüllschlauch oder wenigstens eine Einfüllröhre ausgebildet, der oder die insbesondere an einem unteren Ende lösbar mit einer Oberseite des Pendelbehälters verbindbar oder verbunden ist.

Vorzugsweise weist die Turmplattform eine Durchführungsöffnung zur Durchführung von Pendelballastmaterial auf und ist der wenigstens eine Einfüllschlauch oder die wenigstens eine Einfüllröhre an einem oberen Ende lösbar oder fest an der Durchführungsöffnung mit der Turmplattform verbindbar oder verbunden oder durch die Durchführungsöffnung führbar oder geführt, wobei die Turmplattform insbesondere Mittel zum Verstauen des wenigstens einen Einfüllschlauchs oder der wenigstens einen Einfüllröhre aufweist.

In einer vorteilhaften Weiterbildung ist vorgesehen, dass ein Abgabeschlauch oder eine Abgaberöhre an einer Unterseite der Abgabevorrichtung angeordnet ist und in einen Annahmestutzen, insbesondere einen Trichter, am oberen Ende des wenigstens einen Einfüllschlauchs oder der wenigstens einen Einfüllröhre einführbar oder eingeführt ist. Dies hat den Vorteil, dass ein einzelner Kranführer alleine mithilfe von Kamerabildern die Befüllung des Pendelbehälters vornehmen kann.

Vorteilhafterweise ist ein Abfluss in den Boden des Pendelbehälters eingelassen, der insbesondere mit einem Schüttgut zurückhaltenden wasserdurchlässigen Filter versehen ist. Ein solcher wasserdurchlässiger Filter ist beispielsweise ein Geotextil, also entweder ein Gewebe oder ein Vliesstoff oder ein Verbundstoff flächenhaft verbundener Gewebevliesstoffe und anderer Materialien. Im Abfluss wird ein solcher Filter nur statisch belastet und vorzugsweise mittels eines darunter angeordneten, ggf. abnehmbaren, auf Druckbelastung stabilen Siebs gestützt. Filter und Sieb können nach vollendeter Befüllung des Pendelbehälters und Ablauf des darin enthaltenen Wassers im bzw. am Pendelbehälter verbleiben. Es ist auch möglich, das Sieb anschließend vollständig zu verschließen, beispielsweise mittels eines Deckels, um zu verhindern, dass Schüttgut bei einem Versagen des Filters austreten kann.

Die der Erfindung zugrundeliegende Aufgabe wird ferner auch durch eine Windenergieanlage mit einem Pendeldämpfer gelöst, der in einem Turm der Windenergieanlage an einer Turmplattform unterhalb einer Gondel der Windenergieanlage angeordnet ist und einen mit einer Pendelballastmasse befüllten Pendelbehälter umfasst, herstellbar oder hergestellt in einem zuvor beschriebenen erfindungsgemäßen Verfahren und/oder unter Verwendung eines zuvor beschriebenen erfindungsgemäßen Befüllungssystems, wobei die Turmplattform, an der der Pendeldämpfer befestigt ist, eine Durchführungsöffnung zur Durchführung von Pendelballastmaterial aufweist, wobei insbesondere wenigstens ein Einfüllschlauch oder wenigstens eine Einfüllröhre an einem oberen Ende lösbar oder fest an der Durchführungsöffnung mit der Turmplattform verbindbar oder verbunden ist und insbesondere an einer Oberseite oder Unterseite der Turmplattform Mittel zum Verstauen des wenigstens einen Einfüllschlauchs oder der wenigstens einen Einfüllröhre vorhanden sind.

Eine solche Windenergieanlage ist mit einem Pendeldämpfer versehen, der ausreichend dimensioniert ist. Sie ist in ihrer Errichtung kaum aufwendiger als eine Windenergieanlage ohne Pendeldämpfer.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Teils eines Windenergieanlagenturms im liegenden Zustand,
- Fig. 2: eine schematische Darstellung eines errichteten Windenergieanlagenturms gemäß Fig. 1,
- Fig. 3: eine schematische Darstellung einer Befüllung eines Pendeldämpfers in einem Windenergieanlagenturm gemäß Fig. 2 und
- Fig. 4: eine schematische Darstellung eines erfindungsgemäßen Pendelbehälters.

In den Zeichnungen sind jeweils gleiche oder gleichartige Elemente und/oder Teile mit denselben Bezugsziffern versehen, so dass von einer erneuten Vorstellung jeweils abgesehen wird.

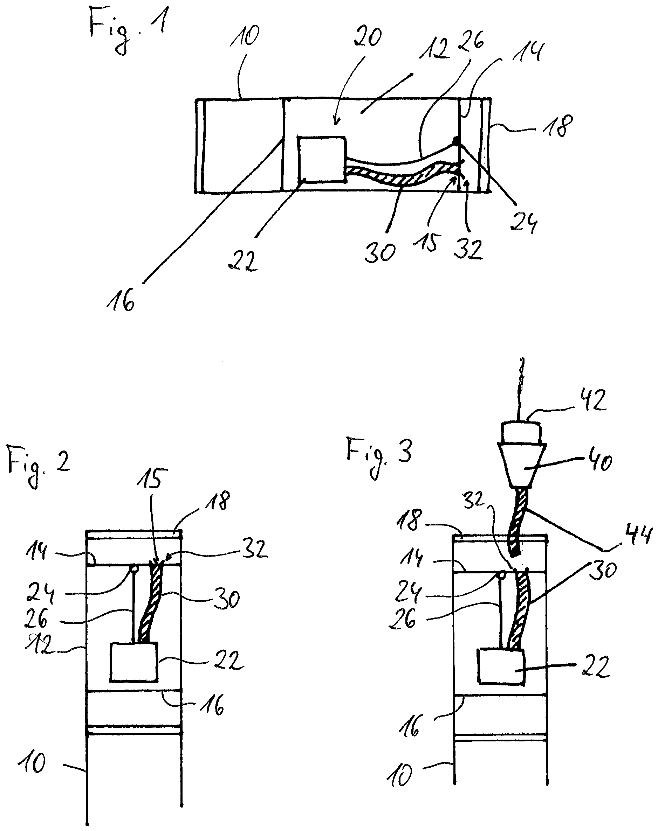

Fig. 1 zeigt schematisch einen Teil eines liegenden Windenergieanlagenturms 10 mit einer oberen Turmsektion 12, die eine obere Turmplattform 14 umfasst. Im links dargestellten unteren Teil der oberen Turmsektion 12 befindet sich eine weitere Plattform, nämlich eine Dämpferplattform 16. Im oberen Bereich rechts ist ein Turmkopfflansch 18 dargestellt. Auf diesen wird später eine Gondel der Windenergieanlage (nicht dargestellt) aufgesetzt werden.

In der oberen Turmsektion 12 zwischen der oberen Turmplattform 14 und der Dämpferplattform 16 ist ein Pendelbehälter 22 eines Pendeldämpfers 20 angeordnet, der mittels wenigstens eines Pendelseils 26 oder wenigstens einer Pendelstange an einer Pendelaufhängung 24 befestigt ist. Im liegenden Zustand hängt das Pendelseil 26 durch. Ebenfalls ist ein Einfüllschlauch 30 vorinstalliert, der an einem Ende mit dem Pendelbehälter 22 und am anderen Ende mit der oberen Turmplattform 14 verbunden ist, die hierfür eine Durchführungsöffnung 15 aufweist. Der Einfüllschlauch 30 mündet jenseits der oberen Turmplattform 14 in einen Trichter 32 oder Einfüllstutzen. Bevorzugt werden mehrere, insbesondere drei, Pendelseile oder Pendelstangen verwendet, um eine Verdrillung des Pendelseils zu vermeiden und/oder ein Verkippen des Pendelbehälters beim Pendeln zu verhindern.

In Fig. 2 ist der Abschnitt des Turms 10 aus Fig. 1 im aufgerichteten Zustand schematisch dargestellt. Nunmehr hängt der Pendelbehälter 22 am Pendelseil 26 oder einer Pendelstange senkrecht herunter und belastet die Pendelaufhängung 24 an der oberen Turmplattform 14. Der Einfüllschlauch 30 hängt ebenfalls zwischen der oberen Turmplattform 14 und der Oberseite des Pendelbehälters 22. Der Pendelbehälter 22 ist ein Ausführungsbeispiel eines Behälters für Schüttgut.

In Fig. 3 ist schematisch dargestellt, wie eine Befüllung des Pendelbehälters 22 aussehen kann. Dazu wird von einem nicht dargestellten Kran an einem Kranhaken 42 eine Abgabevorrichtung 40, die in einen Abgabeschlauch 44 mündet, in den noch offenen Turm 10 eingeführt und das untere Ende des Abgabeschlauchs 44 in den Trichter 32 des Einfüllschlauchs 30 eingesetzt. Dies kann beispielsweise mittels einer Fernüberwachungskamera überwacht werden. Sobald das Einführen und Ausrichten der beiden Schläuche aufeinander vollzogen ist, wird mit dem Einfüllen von Schüttgut aus der Abgabevorrichtung 40 in den Pendelbehälter 22 fortgefahren.

Ein typischer Wert, der allerdings nicht ausschließlich zu verstehen ist und von der individuellen Windenergieanlage abhängt, für die Pendelmasse und die Dimensionen des Pendelbehälters 22 und der Abgabevorrichtung 40 ist beispielsweise eine Pendelmasse von 30 Tonnen. Bei einem Eigengewicht des Pendelbehälters 22 von 3 Tonnen und einer Verwendung von feinem Sand als Schüttgut beispielsweise, der ein Gewicht von ca. 1,5 Tonnen pro Kubikmeter aufweist, ist ein Volumen des Pendelbehälters 22 von etwa 18 Kubikmetern erforderlich. Die Abgabevorrichtung 40 kann beispielsweise ein Volumen von 4 bis 5 Kubikmetern aufweisen, so dass die Befüllung in 4 bis 5 Hüben abgeschlossen werden kann. Diese Werte sind rein beispielhaft und nicht als limitierend zu verstehen.

Nach vollendeter Befüllung des Pendelbehälters 22 kann die nicht dargestellte Gondel auf den Turm aufgesetzt werden, um die Errichtung der Windenergieanlage fortzuführen.

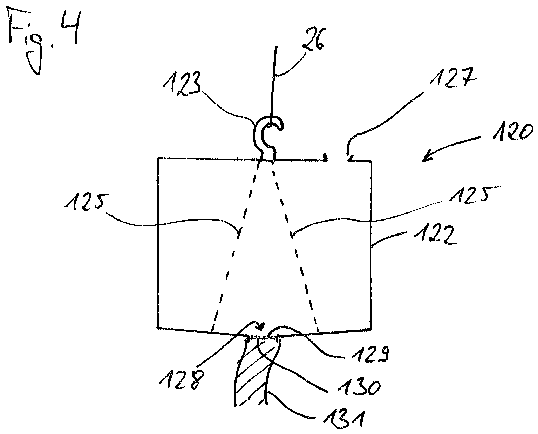

Fig. 4 zeigt ein erfindungsgemäßes Ausführungsbeispiel eines Pendelbehälters 122 eines Pendeldämpfers 120, der für die Befüllung mittels eines Schüttgut-Wasser-Gemischs ausgebildet ist. Der Pendelbehälter 122 weist wenigstens einen Pendelhaken 123 auf, an dem das Pendelseil 26 oder eine Pendelstange angreift. Im Inneren des Pendelbehälters 122 sind, von der Position des Pendelhakens 123 ausgehend, Stabilisierungsstreben 125 vorhanden, die den Boden des Pendelbehälters 122 tragen. Die Figur stellt eine einfache Lösung dar. Im Regelfall werden drei Pendelseile oder - stangen zur Aufhängung aus Stabilitätsgründen bevorzugt. Vorteilhafter Weise liegt die Pendelaufhängung in Form des Pendelhakens abweichend von der Fig. 4 unterhalb des Massenschwerpunktes des Pendelbehälters. So wird ein ungewünschtes zusätzliches Pendeln des Pendelbehälters um seine Aufhängepunkte verhindert.

Weiterhin weist der Pendelbehälter 122 an seiner Oberseite einen Einfüllflansch 127 auf, an den eine Einfüllröhre oder ein Einfüllschlauch 30 anschließbar ist, durch den anschließend ein Wasser-Schüttgut-Gemisch oder alternativ Wasser, beispielsweise Salzwasser, in den Pendelbehälter 122 hineingepumpt werden kann.

Für den Fall, dass von dem Schüttgut-Wasser-Gemisch nur das Schüttgut als Pendelmasse gewünscht ist, da seine Dichte höher ist als die des Wassers, ist der Boden des Pendelbehälters 122 zum Zentrum hin abfallend ausgebildet. Das Zentrum des Bodens weist einen Abfluss 128 auf, an dem ein Abflussschlauch 131 angebracht ist, mit dem abfließendes Wasser abgeführt werden kann. Um das Wasser durchzulassen, das Schüttgut jedoch im Pendelbehälter 122 zurückzuhalten, weist der Abfluss 128 eine Kombination aus einem zuoberst liegenden wasserdurchlässigen Vlies 129 und einem darunter liegenden Stützsieb 130 auf, das ebenfalls Wasser durchlässt. Das Schüttgut, insbesondere feinkörniger Sand, wird durch das Vlies 129, das beispielsweise aus einem Geotextil hergestellt ist, zurückgehalten. Nach vollendeter Befüllung des Pendelbehälters 122 und nachdem sämtliches Wasser abgeflossen ist, können der Abflussschlauch 131 vom Abfluss 128 getrennt und entfernt werden und der Abfluss von unten mit einer anzuschraubenden oder anderweitig zu befestigenden Kappe abgedichtet werden, um auch für die Betriebsdauer der Windenergieanlage ein Austreten von Schüttgut aus dem Pendelbehälter 122 zu verhindern.

Im Rahmen der Erfindung sind Merkmale, die mit "insbesondere" oder "vorzugsweise" gekennzeichnet sind, als fakultative Merkmale zu verstehen.

### Bezugszeichenliste

- 10: Turm
- 12: obere Turmsektion
- 14: obere Turmplattform
- 15: Durchführungsöffnung
- 16: Dämpferplattform
- 18: Turmkopfflansch
- 20: Pendeldämpfer
- 22: Pendelbehälter
- 24: Pendelaufhängung
- 26: Pendelseil
- 30: Einfüllschlauch
- 32: Trichter
- 40: Abgabevorrichtung
- 42: Kranhaken
- 44: Abgabeschlauch
- 120: Pendeldämpfer
- 122: Pendelbehälter
- 123: Pendelhaken
- 125: Stabilisierungsstreben
- 127: Einfüllflansch
- 128: Abfluss
- 129: wasserdurchlässiges Vlies
- 130: Stützsieb
- 131: Abflussschlauch

## Patentansprüche

1. Verfahren zum Einbau eines Pendeldämpfers (20, 120, 220) in eine Windenergieanlage, der in einem Turm (10) der Windenergieanlage unterhalb einer Gondel der Windenergieanlage angeordnet wird, wobei vor oder nach dem Aufrichten des Turms (10) zunächst ein Pendelbehälter (22, 122, 222) im Turm (10), insbesondere an einer Turmplattform (14), befestigt wird und in einem aufgerichteten Zustand des Turms (10) mit Pendelballastmaterial befüllt wird, wobei Schüttgut in trockenem Zustand oder mit Wasser vermischt oder Wasser als Pendelballastmaterial von oben durch wenigstens einen Einfüllschlauch (30) oder wenigstens eine Einfüllröhre in den Pendelbehälter (22, 122) eingefüllt oder gepumpt wird.

2. Verfahren nach Anspruch 1, **dadurch gekennzeichnet, dass** der wenigstens eine Einfüllschlauch (30) oder die wenigstens eine Einfüllröhre an einem unteren Ende lösbar mit einer Oberseite des Pendelbehälters (22, 122) verbunden ist, wobei der wenigstens eine Einfüllschlauch (30) oder die wenigstens eine Einfüllröhre nach der Befüllung des Pendelbehälters (22, 122) vom Pendelbehälter (22, 122) entfernt wird.

3. Verfahren nach Anspruch 1 oder 2, **dadurch gekennzeichnet, dass** die Turmplattform (14) eine Durchführungsöffnung (15) zur Durchführung von Pendelballastmaterial aufweist und der wenigstens eine Einfüllschlauch (30) oder die wenigstens eine Einfüllröhre an einem oberen Ende lösbar oder fest an der Durchführungsöffnung (15) mit der Turmplattform (14) verbindbar oder verbunden ist oder durch die Durchführungsöffnung (15) führbar oder geführt ist, wobei der wenigstens eine Einfüllschlauch (30) oder die wenigstens eine Einfüllröhre nach der Befüllung des Pendelbehälters (22, 122) von der Turmplattform (14) entfernt wird oder an einer Unterseite oder einer Oberseite der Turmplattform (14) zur weiteren Benutzung verstaut wird.

4. Verfahren nach einem der Ansprüche 1 bis 3, **dadurch gekennzeichnet, dass** zum Einfüllen von Schüttgut oder Wasser ein Abgabeschlauch (44) oder eine Abgaberöhre an einer Unterseite einer Abgabevorrichtung (40) für Schüttgut in einen Annahmestutzen, insbesondere einen Trichter (32), am oberen Ende des wenigstens einen Einfüllschlauchs (30) oder der wenigstens einen Einfüllröhre eingeführt wird, bevor mit dem Einfüllen von Schüttgut begonnen wird.

5. Verfahren nach einem der Ansprüche 1 bis 4, **dadurch gekennzeichnet, dass** mit Schüttgut vermischtes oder überschüssiges Wasser über einen an einem Boden des Pendelbehälters (122) eingelassenen Abfluss (128) und gegebenenfalls einen daran angeschlossenen Abflussschlauch (131) abgeführt wird, wobei insbesondere das Schüttgut im Pendelbehälter (122) zurückgehalten wird.

6. Befüllungssystem für einen Pendeldämpfer (20, 120, 220) einer Windenergieanlage, umfassend einen Pendeldämpfer (20, 120, 220) mit einem Pendelbehälter (22, 122, 222), der an einer Turmplattform (14) im oberen Bereich eines Turms (10) einer Windenergieanlage befestigbar oder befestigt ist, eine Schüttgut-Abgabevorrichtung (40), die ausgebildet ist, Pendelballastmaterial in Form von Schüttgut in trockenem Zustand oder mit Wasser vermischt oder Wasser als Pendelballastmaterial in den Pendelbehälter (22, 122, 222) von oben durch wenigstens einen Einfüllschlauch (30) oder wenigstens eine Einfüllröhre zu füllen, sowie einen Kran, mittels dessen die Abgabevorrichtung (40) über den Pendelbehälter (22, 122, 222) bringbar ist.

7. Befüllungssystem nach Anspruch 6, **dadurch gekennzeichnet, dass** der Einfüllschlauch (30) oder die Einfüllröhre an einem unteren Ende lösbar mit einer Oberseite des Pendelbehälters (22, 122) verbindbar oder verbunden ist.

8. Befüllungssystem nach Anspruch 6 oder 7, **dadurch gekennzeichnet, dass** die Turmplattform (14) eine Durchführungsöffnung (15) zur Durchführung von Pendelballastmaterial aufweist und der wenigstens eine Einfüllschlauch (30) oder die wenigstens eine Einfüllröhre an einem oberen Ende lösbar oder fest an der Durchführungsöffnung (15) mit der Turmplattform (14) verbindbar oder verbunden ist oder durch die Durchführungsöffnung (15) führbar oder geführt ist, wobei die Turmplattform insbesondere Mittel zum Verstauen des wenigstens einen Einfüllschlauchs (30) oder der wenigstens einen Einfüllröhre aufweist.

9. Befüllungssystem nach Anspruch 6, 7 oder 8, **dadurch gekennzeichnet, dass** ein Abgabeschlauch (44) oder eine Abgaberöhre an einer Unterseite der Abgabevorrichtung (40) angeordnet ist und in einen Annahmestutzen, insbesondere einen Trichter (32), am oberen Ende des wenigstens einen Einfüllschlauchs (30) oder der wenigstens einen Einfüllröhre einführbar oder eingeführt ist.

10. Befüllungssystem nach einem der Ansprüche 6 bis 9, **dadurch gekennzeichnet, dass** ein Abfluss (128) in den Boden des Pendelbehälters (122) eingelassen ist, der insbesondere mit einem Schüttgut zurückhaltenden wasserdurchlässigen Filter versehen ist.

11. Windenergieanlage mit einem Pendeldämpfer (20, 120, 220), der in einem Turm (10) der Windenergieanlage an einer Turmplattform (14) unterhalb einer Gondel der Windenergieanlage angeordnet ist und einen mit einer Pendelballastmasse befüllten Pendelbehälter (22, 122, 222) umfasst, herstellbar oder hergestellt in einem Verfahren nach einem der Ansprüche 1 bis 5 und/oder unter Verwendung eines Befüllungssystems nach einem der Ansprüche 6 bis 10, wobei die Turmplattform (14), an der der Pendeldämpfer (20, 120, 220) befestigt ist, eine Durchführungsöffnung (15) zur Durchführung von Pendelballastmaterial aufweist, wobei insbesondere wenigstens ein Einfüllschlauch (30) oder wenigstens eine Einfüllröhre an einem oberen Ende lösbar oder fest an der Durchführungsöffnung (15) mit der Turmplattform (14) verbindbar oder verbunden ist und insbesondere an einer Oberseite oder Unterseite der Turmplattform (14) Mittel zum Verstauen des wenigstens einen Einfüllschlauchs (30) oder der wenigstens einen Einfüllröhre vorhanden sind.

## Claims

1. A method of installing a tuned mass damper (20, 120, 220) in a wind energy installation, which is arranged in a tower (10) of the wind energy installation below a nacelle of the wind energy installation, wherein, before or after the erection of the tower (10), a pendulum container (22, 122, 222) is first fastened in the tower (10), in particular to a platform (14) of the tower, and is filled with pendulum ballast material in an erected state of the tower (10), wherein bulk material in a dry state or mixed with water, or water is filled or pumped as pendulum ballast material from above through at least one filling hose (30) or at least one filling tube into the pendulum container (22, 122).

2. The method according to claim 1, **characterised in that** the at least one filling hose (30) or the at least one filling tube is connected, at a lower end thereof, and in a detachable manner, to an upper side of the pendulum container (22, 122), wherein the at least one filling hose (30) or the at least one filling tube is removed from the pendulum container (22, 122) after the pendulum container (22, 122) has been filled.

3. The method according to claim 1 or 2, **characterised in that** the platform (14) of the tower has a passage-type opening (15) for the passage of pendulum ballast material, and the at least one filling hose (30) or the at least one filling tube can be connected or is connected, at an upper end thereof, and in a detachable or a fixed manner, to the platform (14) of the tower at the passage-type opening (15), or can be guided or is guided through the passage-type opening (15), wherein the at least one filling hose (30) or the at least one filling tube is removed from the platform (14) of the tower after the pendulum container (22, 122) has been filled, or is stored at a lower side or on an upper side of the platform (14) of the tower for further use.

4. The method according to any one of the claims 1 to 3, **characterised in that**, for the purpose of filling bulk material or water into the pendulum container, a delivery hose (44) or a delivery tube at a lower side of a delivery device (40) for bulk material is introduced into a receiving pipe, in particular a funnel (32), at the upper end of the at least one filling hose (30) or the at least one filling tube before the filling process using bulk material is started.

5. The method according to any one of the claims 1 to 4, **characterised in that** water which is mixed with bulk material, or excess water, is discharged via a drain (128) which is formed into a bottom of the pendulum container (122) and, if applicable, via a drain hose (131) connected thereto, in particular wherein the bulk material is retained in the pendulum container (122).

6. A filling system for a tuned mass damper (20, 120, 220) of a wind energy installation, comprising a tuned mass damper (20, 120, 220) having a pendulum container (22, 122, 222) which can be fastened, or is fastened, to a platform (14) of the tower in the upper region of a tower (10) of a wind energy installation, a bulk material delivery device (40) which is constructed for use in filling the pendulum container (22, 122, 222), from above through at least one filling hose (30) or at least one filling tube with a pendulum ballast material in the form of bulk material in a dry condition or mixed with water, or with water as pendulum ballast material, as well as a crane by means of which the delivery device (40) can be brought to a position above the pendulum container (22, 122, 222).

7. The filling system according to claim 6, **characterised in that** the filling hose (30) or the filling tube can be connected, or is connected, at a lower end thereof, to an upper side of the pendulum container (22, 122).

8. The filling system according to claim 6 or 7, **characterised in that** the platform (14) of the tower has a passage-type opening (15) for the passage of pendulum ballast material, and the at least one filling hose (30) or the at least one filling tube can be connected or is connected, at an upper end thereof, and in a detachable or a fixed manner, to the platform (14) of the tower at the passage-type opening (15), or can be guided or is guided through the passage-type opening (15), in particular wherein the platform of the tower comprises means for storing the at least one filling hose (30) or the at least one filling tube.

9. The filling system according to claim 6, 7 or 8, **characterised in that** a delivery hose (44) or a delivery tube is arranged at a lower side of the delivery device (40) and can be introduced, or is introduced, into a receiving pipe, in particular a funnel (32), at the upper end of the at least one filling hose (30) or the at least one filling tube.

10. The filling system according to any one of the claims 6 to 9, **characterised in that** a drain (128) is formed into the bottom of the pendulum container (122), in particular wherein the drain (128) is provided with a water permeable filter which is arranged to retain bulk material.

11. A wind energy installation comprising a tuned mass damper (20, 120, 220), which is arranged in a tower (10) of the wind energy installation on a platform (14) of the tower below a nacelle of the wind energy installation and which comprises a pendulum container (22, 122, 222) which is filled with a pendulum ballast mass, which tuned mass damper (20, 120, 220) can be produced or is produced by means of a method according to any one of the claims 1 to 5 and / or using a filling system according to any one of the claims 6 to 10, wherein the platform (14) of the tower, to which the tuned mass damper (20, 120, 220) is attached, has a passage-type opening (15) for the passage of pendulum ballast material, in particular wherein at least one filling hose (30) or at least one filling tube can be connected or is connected, at an upper end thereof, and in a detachable or a fixed manner, to the platform (14) of the tower at the passage-type opening (15), and in particular wherein a means for storing the at least one filling hose (30) or the at least one filling tube is provided on an upper side or a lower side of the platform (14) of the tower.

## Revendications

1. Procédé d'intégration d'un amortisseur pendulaire (20, 120, 220) dans une éolienne, qui est agencé dans une tour (10) de l'éolienne en dessous d'une nacelle de l'éolienne, dans lequel avant ou après le redressement de la tour (10) un récipient pendulaire (22, 122, 222) est d'abord fixé dans la tour (10), en particulier au niveau d'une plateforme de tour (14), et est rempli dans un état redressé de la tour (10) de matériau de ballast pendulaire, dans lequel du produit en vrac à l'état sec ou mélangé à l'eau ou de l'eau comme matériau de ballast pendulaire est rempli ou pompé par le haut par au moins un tuyau de remplissage (30) ou au moins un tube de remplissage dans le récipient pendulaire (22, 122).

2. Procédé selon la revendication 1, **caractérisé en ce que** l'au moins un tuyau de remplissage (30) ou l'au moins un tube de remplissage est relié à une extrémité inférieure de manière amovible à un côté supérieur du récipient pendulaire (22, 122), dans lequel l'au moins un tuyau de remplissage (30) ou l'au moins un tube de remplissage est retiré du récipient pendulaire (22, 122) après le remplissage du récipient pendulaire (22, 122).

3. Procédé selon la revendication 1 ou 2, **caractérisé en ce que** la plateforme de tour (14) présente une ouverture de passage (15) pour le passage de matériau de ballast pendulaire et l'au moins un tuyau de remplissage (30) ou l'au moins un tube de remplissage peut être relié ou est relié à une extrémité supérieure de manière amovible ou solidaire au niveau de l'ouverture de passage (15) à la plateforme de tour (14) ou peut être guidé ou est guidé par l'ouverture de passage (15), dans lequel l'au moins un tuyau de remplissage (30) ou l'au moins un tube de remplissage est retiré de la plateforme de tour (14) après le remplissage du récipient pendulaire (22, 122) ou est rangé au niveau d'un côté inférieur ou d'un côté supérieur de la plateforme de tour (14) pour une utilisation ultérieure.

4. Procédé selon l'une quelconque des revendications 1 à 3, **caractérisé en ce que** pour le remplissage de produit en vrac ou d'eau, un tuyau de distribution (44) ou un tube de distribution est introduit au niveau d'un côté inférieur d'un dispositif de distribution (40) pour produit en vrac dans une tubulure de réception, en particulier un entonnoir (32), à l'extrémité supérieure de l'au moins un tuyau de remplissage (30) ou de l'au moins un tube de remplissage, avant de débuter le remplissage de produit en vrac.

5. Procédé selon l'une quelconque des revendications 1 à 4, **caractérisé en ce que** l'eau excédentaire ou mélangée au produit en vrac est évacuée par le biais d'une évacuation (128) ménagée au niveau d'un fond du récipient pendulaire (122) et le cas échéant d'un tuyau d'évacuation (131) qui y est raccordé, dans lequel en particulier le produit en vrac est retenu dans le récipient pendulaire (122).

6. Système de remplissage pour un amortisseur pendulaire (20, 120, 220) d'une éolienne, comprenant un amortisseur pendulaire (20, 120, 220) avec un récipient pendulaire (22, 122, 222), qui peut être fixé ou est fixé au niveau d'une plateforme de tour (14) dans la zone supérieure d'une tour (10) d'une éolienne, un dispositif de distribution de produit en vrac (40), qui est réalisé pour remplir du matériau de ballast pendulaire sous forme de produit en vrac à l'état sec ou mélangé à l'eau ou d'eau comme matériau de ballast pendulaire dans le récipient pendulaire (22, 122, 222) par le haut par au moins un tuyau de remplissage (30) ou au moins un tube de remplissage, ainsi qu'une grue, au moyen de laquelle le dispositif de distribution (40) peut être amené au-dessus du récipient pendulaire (22, 122, 222).

7. Système de remplissage selon la revendication 6, **caractérisé en ce que** le tuyau de remplissage (30) ou le tube de remplissage peut être relié ou est relié à une extrémité inférieure de manière amovible à un côté supérieur du récipient pendulaire (22, 122).

8. Système de remplissage selon la revendication 6 ou 7, **caractérisé en ce que** la plateforme de tour (14) présente une ouverture de passage (15) pour le passage de matériau de ballast pendulaire et l'au moins un tuyau de remplissage (30) ou l'au moins un tube de remplissage peut être relié ou est relié à une extrémité supérieure de manière amovible ou solidaire au niveau de l'ouverture de passage (15) à la plateforme de tour (14) ou peut être guidé ou est guidé par l'ouverture de passage (15), dans lequel la plateforme de tour présente en particulier des moyens de rangement de l'au moins un tuyau de remplissage (30) ou de l'au moins un tube de remplissage.

9. Système de remplissage selon la revendication 6, 7 ou 8, **caractérisé en ce qu'**un tuyau de distribution (44) ou un tube de distribution est agencé au niveau d'un côté inférieur du dispositif de distribution (40) et peut être introduit ou est introduit dans une tubulure de réception, en particulier un entonnoir (32), à l'extrémité supérieure de l'au moins un tuyau de remplissage (30) ou de l'au moins un tube de remplissage.

10. Système de remplissage selon l'une quelconque des revendications 6 à 9, **caractérisé en ce qu'**une évacuation (128) est ménagée dans le fond du récipient pendulaire (122), qui est doté en particulier d'un filtre perméable à l'eau retenant le produit en vrac.

11. Éolienne avec un amortisseur pendulaire (20, 120, 220), qui est agencé dans une tour (10) de l'éolienne au niveau d'une plateforme de tour (14) en dessous d'une nacelle de l'éolienne et comprend un récipient pendulaire (22, 122, 222) rempli d'une masse de ballast pendulaire, pouvant être fabriqué ou fabriqué dans un procédé selon l'une quelconque des revendications 1 à 5 et/ou en utilisant un système de remplissage selon l'une quelconque des revendications 6 à 10, dans laquelle la plateforme de tour (14), au niveau de laquelle l'amortisseur pendulaire (20, 120, 220) est fixé, présente une ouverture de passage (15) pour le passage de matériau de ballast pendulaire, dans laquelle en particulier au moins un tuyau de remplissage (30) ou au moins un tube de remplissage peut être relié ou est relié à une extrémité supérieure de manière amovible ou solidaire au niveau de l'ouverture de passage (15) à la plateforme de tour (14) et en particulier au niveau d'un côté supérieur ou côté inférieur de la plateforme de tour (14), des moyens de rangement de l'au moins un tuyau de remplissage (30) ou de l'au moins un tube de remplissage sont présents.
